# EUROPEAN PATENT APPLICATION

(11) **EP 4 787 326 A2**
(43) Date of publication of application: **05.08.2026**
(21) Application number: 26154313.6
(22) Date of filing: 27.01.2026
(51) Int. Cl.: G06T 17/20

(54) **IMAGE PROCESSING APPARATUS AND IMAGE PROCESSING METHOD**

(30) Priority: 29.01.2025 JP 2025013208
(71) Applicant: Canon Kabushiki Kaisha, Tokyo, 146-8501 (JP)
(72) Inventor: SUZUKI, Kanji, Ohta-ku, Tokyo, 146-8501 (JP)
(74) Representative: TBK

(57) **Abstract**

An image processing apparatus (100) that generates three-dimensional data of an object based on a depth image, is disclosed. The apparatus (100) sets, to an object region in an image to be divided that is based on the depth image, a boundary region between the object region and a background region, and divides the image to be divided into a plurality of sub-regions. The apparatus (100) determines a vertex for each sub-region that includes the object region among the plurality of sub-regions and adds a vertex to the boundary region. Then the apparatus (100) generates the three-dimensional data using the vertices determined and the vertex added.

## Description

### TECHNICAL FIELD

The present disclosure relates to an image processing apparatus, an image processing method, a computer-readable medium, and a computer program product. The present disclosure particularly relates to a technique for generating three-dimensional data.

### BACKGROUND

Conventionally, apparatuses that can be used to acquire distance distribution information (a depth map), such as stereo cameras and Time-of-Flight cameras, are known. Also, a point group can be obtained by applying perspective projection transformation to a depth map. Furthermore, a three-dimensional surface model having surfaces can be generated by assigning topological information between vertices of a point group and generating polygons.

The accuracy of three-dimensional data can be enhanced by increasing the number of polygons; however, this, in turn, results in an increase in the data size. In Document 1 (Renato Pajarola, "Overview of Quadtree-based Terrain Triangulation and Visualization", UCI-ICS Technical Report No. 02-01, University of California, Irvine, January 2002), small polygons are used for regions in which there is a large change in shape, and large polygons are used for regions in which there is not much change in shape, thereby reducing the amount of data necessary for shape representation of the same level compared to a case in which polygons of uniform size are used.

Depending on the position of the object for which three-dimensional data is to be generated, the viewpoint position from which a depth map of the object is acquired, etc., distance information may not be successfully acquired for a region on the surface of the object. Such a case gives rise to the problem of how region division is to be performed for a boundary (edge) between a portion for which distance information has been obtained and a portion for which distance information has not been obtained; however, nothing is mentioned regarding this point in Document 1.

Applying the method disclosed in Document 1 to the edge portion results in unnecessary polygons being generated and/or necessary polygons not being generated, and the edge portion is represented in an unnatural manner by the generated three-dimensional data.

### SUMMARY

Applying the method disclosed in Document 1 to the edge portion results in unnecessary polygons being generated and/or necessary polygons not being generated, and the edge portion is represented in an unnatural manner by the generated three-dimensional data.

The present disclosure, in some embodiments thereof, provides an image processing apparatus and an image processing method that can be used to generate three-dimensional data in which the representation of a boundary between a portion for which distance information has been obtained and a portion for which distance information has not been obtained is improved.

The present disclosure in its first aspect provides an image processing apparatus as specified in claim 1. Optional features are specified in claims 2 to 10, and 15.

The present disclosure in its second aspect provides an image processing apparatus as specified in claim 11. Optional features are specified in or derivable from claims 12 to 15.

The present disclosure in its third aspect provides an image processing apparatus as specified in claim 16. Optional features are specified in or derivable from claims 17 to 18.

The present disclosure in its fourth aspect provides an image processing method as specified in claim 19.

The present disclosure in its fifth aspect provides a computer program as specified in claim 20.

The present disclosure in its sixth aspect provides an image processing method as specified in claim 21.

The present disclosure in its seventh aspect provides a computer program as specified in claim 22.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a diagram for describing an edge of three-dimensional data.
FIGS. 2A to 2C are diagrams for describing an example in which the accuracy of representation of an edge portion decreases.
FIG. 3 is a block diagram illustrating an example of a functional configuration of an image processing apparatus according to embodiments.
FIG. 4 is a flowchart relating to three-dimensional-data generation processing in the embodiments.
FIG. 5 is a flowchart relating to processing for generating a polygon mesh for each mesh unit region.
FIGS. 6A and 6B are diagrams relating to a mesh unit region and a generated polygon mesh.
FIGS. 7A to 7D are schematic diagrams illustrating a polygon-mesh generation process in a first embodiment.
FIGS. 8A to 8E are diagrams relating to a vertex addition method in a second embodiment.
FIGS. 9A to 9D are schematic diagrams illustrating a polygon-mesh generation process in the second embodiment.
FIGS. 10A to 10F are diagrams for describing an issue to be solved by a third embodiment and a solution method therefor.
FIGS. 11A to 11F are diagrams for describing an issue to be solved by a fourth embodiment.
FIGS. 12A to 12C are schematic diagrams illustrating a polygon-mesh generation process in the fourth embodiment.
FIG. 13 is a schematic diagram of a polygon mesh generated in a fifth embodiment.
FIG. 14 is a flowchart relating to polygon-mesh generation processing in a sixth embodiment.
FIGS. 15A to 15D are schematic diagrams illustrating a polygon-mesh generation process in the sixth embodiment.
FIG. 16 is a flowchart relating to polygon-mesh generation processing in a seventh embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### First Embodiment

First, terms used in the following description are defined as follows.

A "captured image" is an image obtained by shooting an image of an object. A captured image is formed from a plurality of pixels that are arranged two-dimensionally in the horizontal and vertical directions. Each pixel has a luminance component and a color component.

A "depth image" is information representing a distance distribution corresponding to a captured image. Here, a depth image represents distance information for each pixel in a captured image; however, the resolution may differ between a depth image and a captured image. A depth image is also called a depth map or a distance image.

A captured image and a depth image may be generated in advance according to a known method, or may be generated by an image processing apparatus according to the embodiments. For example, by performing image shooting using an image sensor that is compatible with the imaging-plane phase-difference detection method, both a captured image and a depth image can be generated by performing image shooting once. Alternatively, a captured image may be generated by an imaging apparatus, and a depth image may be generated using a Light Detection and Ranging (LiDAR) sensor or the like.

A "region to be divided" is an image region which is included in an image used for generation of three-dimensional data and to which region-division processing is applied. An image used for generation of three-dimensional data may be a captured image, a depth image, or an image based on a captured image or a depth image.

"Region-division processing" is processing for dividing a region to be divided into a plurality of sub-regions having a predetermined shape. Sub-regions have the same shape but may differ in size.

A "mesh unit region" is a partial region which is included in a region to be divided and which is a unit for which a polygon mesh is generated as three-dimensional data. A "mesh unit region" is formed from one or more sub-regions.

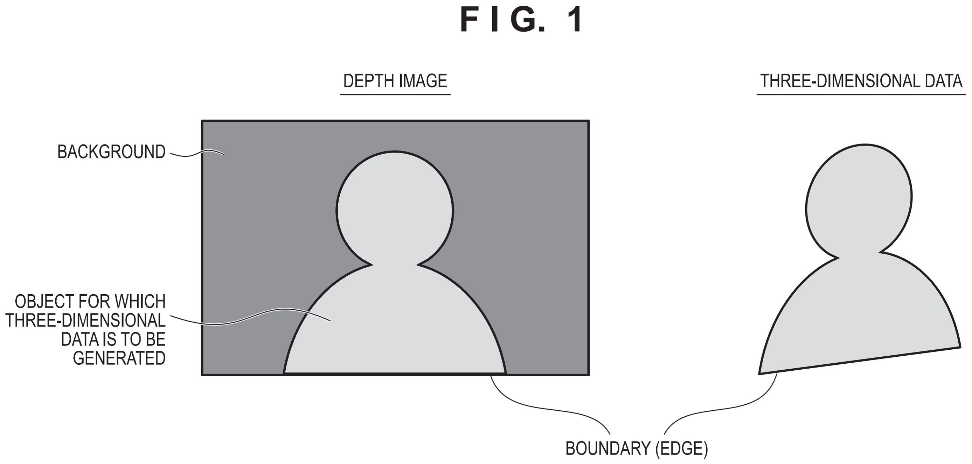

Before describing the embodiments, an issue with conventional technology will be described in detail. FIG. 1 schematically illustrates a depth image corresponding to a captured image of an object for which three-dimensional data is to be generated, and the object as represented by three-dimensional data generated based on the depth image.

In the example illustrated in FIG. 1, the three-dimensional data is generated using only a depth image obtained from one viewpoint; thus, distance information is not obtained for unimaged portions such as the side, back, and bottom sides of the object. Due to this, in a curved surface represented by the generated three-dimensional data, an edge is formed at a boundary portion of the object region in the depth image.

For example, suppose that region division is executed as disclosed in Document 1 so that portions of the object region in which the change in distance is great are divided into small sub-regions and portions of the object region in which the change in distance is small are divided into large sub-regions.

In this case, it is likely that the edge portion having a small difference in distance from the background would be divided into relatively large sub-regions including both the object and the background. Due to this, the accuracy with which the edge portion is represented by a polygon mesh would decrease if the polygon mesh were generated so as to include one vertex per sub-region.

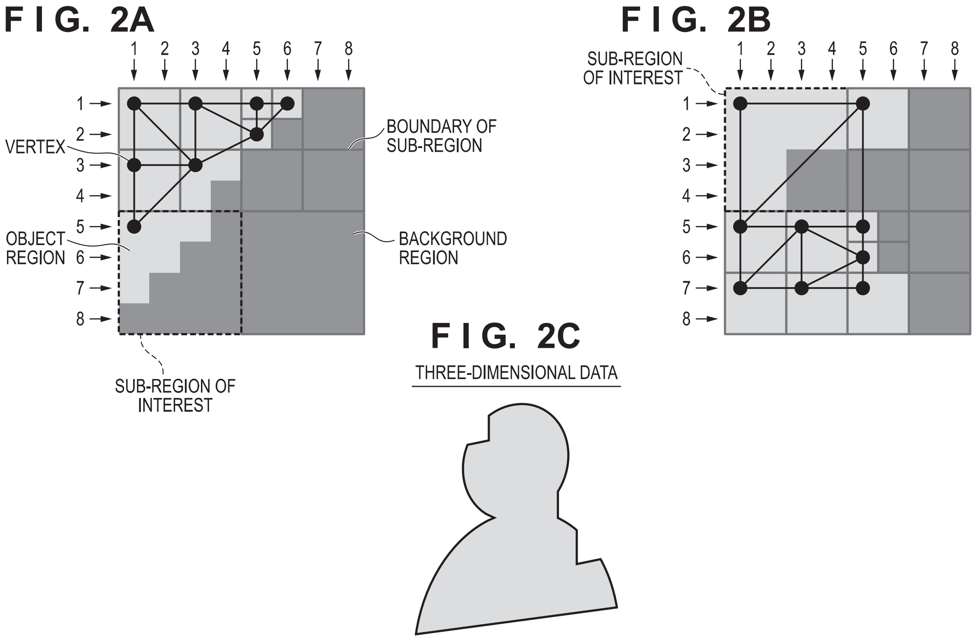

FIGS. 2A and 2B each illustrate an 8×8-pixel region corresponding to the edge portion of a depth image. The numerals 1 to 8 in the horizontal direction are column numbers, and the numerals 1 to 8 in the vertical direction are row numbers. The background region is shown in dark grey, and the object region in light grey. Furthermore, the region is divided into square sub-regions by quadtree-based region-division processing. In addition, a triangular polygon mesh for representing the object region is generated so that, for each sub-region, a pixel near the upper left vertex of the sub-region is included as a vertex.

In both FIGS. 2A and 2B, it can be seen that the shape representation accuracy of the polygon mesh is low in regard to the shape of the object region included in a sub-region of interest, which is a relatively large sub-region including both the object and the background. Specifically, in the example in FIG. 2A, the object region in the sub-region of interest is represented so as to be smaller than it actually is. This is because there is an object region for which no polygon is formed due to a vertex (•) for polygon-mesh generation being set only to one pixel in the 6-pixel object region included in the sub-region of interest.

On the other hand, in the example in FIG. 2B, even a portion that is not an object region is represented as an object region. This is because the polygon mesh generated from vertices for polygon-mesh generation set to the sub-region of interest and sub-regions adjacent thereto includes the background region.

If such a situation occurs over the entire edge portion, the quality of the edge portion of the shape of the object would be low as schematically illustrated in FIG. 2C in the object region represented by the polygon mesh generated in the end.

### <Configuration of Image Processing Apparatus>

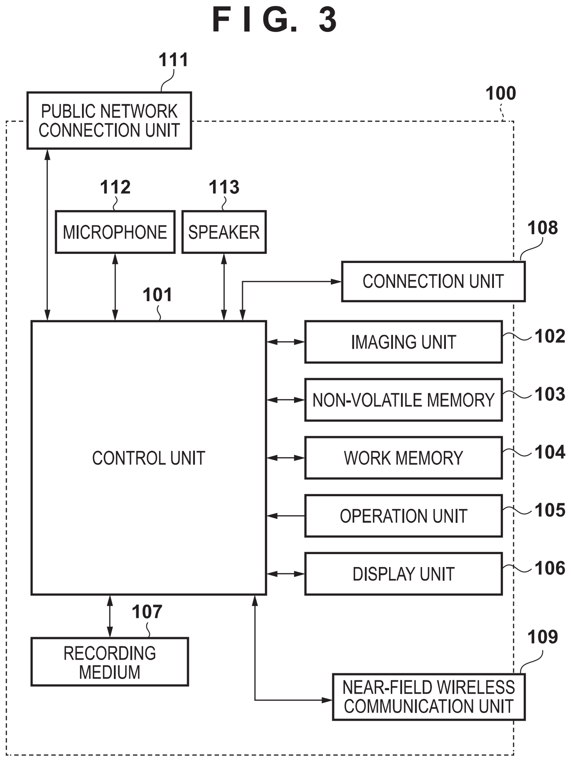

FIG. 3 is a block diagram illustrating an example of a functional configuration of an image processing apparatus 100 according to the embodiments. The image processing apparatus 100 may be any type of computer apparatus that is capable of processing image data, such as a smartphone, a smartwatch, a tablet terminal, a laptop computer, a game console, or an imaging apparatus, for example.

A control unit 101 includes one or more processors that are capable of executing programs. The control unit 101 realizes the later-described operations of the image processing apparatus 100 by loading one or more programs stored in a non-volatile memory 103 into a work memory to execute the programs. Note that at least some of the functions realized by the control unit 101 executing the programs may be executed by one or more other pieces of hardware.

An imaging unit 102 includes, for example, an image-capturing optical system and an image sensor that photoelectrically converts an object image generated by the image-capturing optical system into an image signal. The image-capturing optical system includes movable lenses such as a focus lens and an aperture, which are driven by the control unit 101. The image sensor includes a plurality of pixels that are disposed two-dimensionally, and converts the object image into a pixel signal group (analog image signal) by each pixel generating electric charge corresponding to the light amount incident thereon. The image sensor may be a CMOS image sensor or a CCD image sensor.

The analog image signal is output from the imaging unit 102 as a digital image signal (image data) after being subjected to noise reduction processing and A/D conversion processing. Note that the imaging unit 102 may include other components, such as a focal-plane shutter and an anti-vibration mechanism. The operation of the imaging unit 102 is controlled by the control unit 101.

In the present embodiments, each of the pixels disposed in the image sensor includes a plurality of photoelectric conversion regions and can generate focus detection signals for executing automatic focus detection of the imaging-plane phase-difference detection method. Furthermore, because a parallax image pair can be generated from image data read from the image sensor, a depth image can be acquired in addition to a captured image. Note that, in a case in which the image processing apparatus 100 includes a distance-information-acquiring means such as a LiDAR sensor, the depth image may be generated using the LiDAR sensor.

Note that image data for generating three-dimensional data may be acquired, for example, from a recording medium 107 or an external apparatus. Thus, the imaging unit 102 is not essential to the image processing apparatus 100.

Various types of image processing are applied to image data by the control unit 101 to generate image data that is in accordance with the settings and the purpose of use. For example, data of depth images and captured images generated for recording is stored in data files having a format based on the settings and recorded to the recording medium 107 or the non-volatile memory 103.

The non-volatile memory 103 is electrically rewritable. The non-volatile memory 103 stores therein programs that can be executed by the processors of the control unit 101, GUI data such as a menu screen, and various settings, specific information, etc., of the image processing apparatus 100. Furthermore, data of depth images and captured images can also be stored in the non-volatile memory 103. The programs include an operating system (OS) and application programs (hereinafter "applications") that run on the OS. In the present embodiments, an application for generating three-dimensional data is stored in the non-volatile memory 103.

A work memory 104 is a RAM, for example, and is used to temporarily hold programs, data, etc. A partial region of the work memory 104 is used as a video memory for a display unit 106.

An operation unit 105 is a name that collectively refers to a group of input devices that allow a user of the image processing apparatus 100 to input instructions to the image processing apparatus 100. For example, the operation unit 105 includes a power switch for instructing the image processing apparatus 100 to turn on and off, and + (plus) and - (minus) buttons used for volume adjustment, etc. Furthermore, the touch panel included in the display unit 106, which is a touch display, is also included in the operation unit 105.

The display unit 106 is a touch display, and displays image data obtained by the imaging unit 102, image data reproduced from the non-volatile memory 103, the recording medium 107, etc., GUIs such as screens provided by the OS, etc. In the image processing apparatus 100, the launching of applications and operations on GUIs provided by the applications are basically performed via touch operations on the display unit 106.

For example, the recording medium 107 may be at least one of a detachable memory card and a built-in non-volatile memory. The recording medium 107 is the destination to which image data obtained by image shooting using the imaging unit 102 is recorded. Note that the recording destination of image data may be the non-volatile memory 103 or an external storage device that the image processing apparatus 100 is capable of accessing.

A connection unit 108 is an interface for communication with external apparatuses, and is capable of communication based on at least one wireless communication method. The connection unit 108 may include one or more wired communication interfaces such as a USB interface and/or an HDMI (registered trademark) interface. The connection unit 108 includes components that are necessary for the supported communication method(s). For example, the components include an antenna, a connector, a modulation/demodulation circuit, a transmission/reception circuit, etc.

In the present embodiments, the connection unit 108 supports wireless LAN communication conforming to the IEEE 802.11x series of standards (where x is a, b, g, n, ac, ax, etc.). Note that it is sufficient that the connection unit 108 support the infrastructure mode, and the connection unit 108 may optionally support the ad hoc mode. The operation of the connection unit 108 is controlled by the control unit 101. Note that the connection unit 108 may support one or more other wireless communication methods. Furthermore, the protocol for communication on a wireless connection that has been established is not particularly limited, and known protocols such as TCP/IP can be used.

Similarly to the connection unit 108, a near-field wireless communication unit 109 is an interface for communication with external apparatuses. The near-field wireless communication unit 109 supports a wireless communication method that has a shorter communication range than that of the connection unit 108. In the present embodiment, the near-field wireless communication unit 109 supports wireless communication conforming to the Bluetooth (registered trademark) Low Energy standard; however, the near-field wireless communication unit 109 may support other near-field wireless communication standards. The operation of the near-field wireless communication unit 109 is controlled by the control unit 101.

The image processing apparatus 100 (the control unit 101) is capable of communicating with external apparatuses using one or more of the connection unit 108 and the near-field wireless communication unit 109. The external apparatuses that the image processing apparatus 100 can communicate with are external apparatuses that support at least one of the communication standards supported by the connection unit 108 and the near-field wireless communication unit 109.

A public network connection unit 111 is a wireless communication interface for connecting to a cellular network. The image processing apparatus 100 is capable of being connected to a cellular network conforming to a 3GPP (registered trademark) standard such as 3G, 4G, and/or 5G via the public network connection unit 111 to make calls with fixed-line telephones and cellular phones, and perform data communication with an external apparatus. During a call, the control unit 101 can use a microphone 112 as a voice input device and a speaker 113 as a voice output device. The public network connection unit 111 includes components that are necessary for the supported communication method(s). For example, the components include an antenna, a modulation/demodulation circuit, a transmission/reception circuit, etc. The antenna may be shared with the connection unit 108.

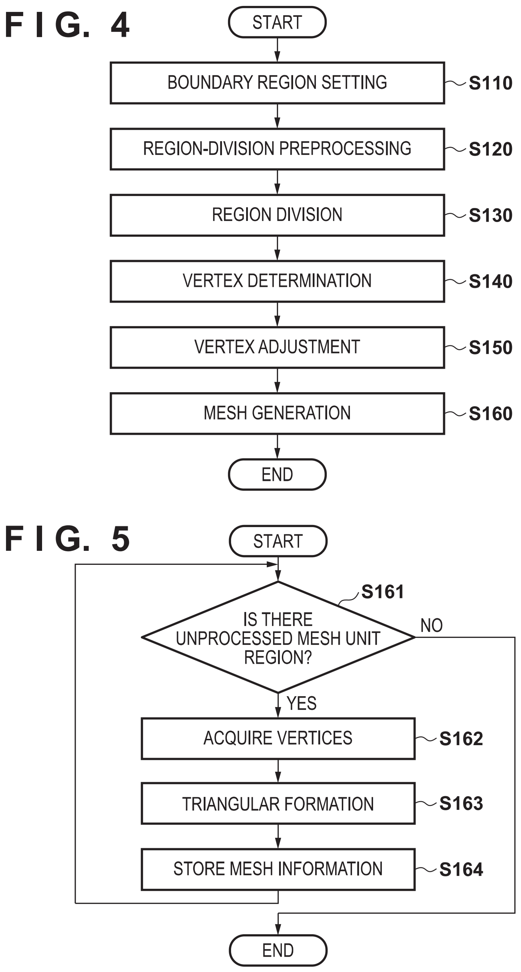

Next, operations executed by the image processing apparatus 100 to generate three-dimensional data (polygon-mesh data) will be described based on the flowchart illustrated in FIG. 4. Note that, for example, the operations described in the following can be carried out by the control unit 101 executing an application for generating three-dimensional data. Note that some of the operations executed by the control unit 101 may be executed by another component, e.g., a hardware circuit such as a GPU, NPU, or ASIC. Furthermore, the operations for generating three-dimensional data are not limited to being carried out during the execution of the specific application, and may be executed as part of another application.

In the following, it is assumed that a captured image of an object for which three-dimensional data is to be generated and a depth image corresponding to the captured image are recorded in advance in the recording medium 107; however, the generation of a captured image and depth image, and the generation of three-dimensional data may be executed as a series of operations.

Furthermore, the present embodiment is based on a situation in which distance information cannot be acquired for part of the object for which three-dimensional data is to be generated, and, due to this, the surface represented by the three-dimensional data does not form a closed surface and has an edge. In the following, a case in which three-dimensional data is generated based on a depth image obtained from a single viewpoint will be described as the most typical example; however, the effects of the present embodiment can be achieved by applying similar processing to the edge portion also in a case in which depth images obtained from multiple viewpoints are used.

### <Boundary Region Setting Step S110>

In a boundary region setting step S110, the control unit 101 sets a boundary region between the object region and the background region in the depth image. First, the control unit 101 generates a mask image based on the depth image. The mask image is a binary image in which the object-region pixel value is 1 and the background-region pixel value is 0. The mask image can be generated using an appropriate known method for separating the object region and the background region from one another. For example, positions in the depth image where the distance gradient is greater than or equal to a threshold can be detected as the outer edge of the object region, or the object region can be detected from the captured image and the remaining region can be set as the background region. Alternatively, the mask image can be generated from the captured image using a trained machine learning model.

The control unit 101 can set, as the boundary region, regions of the object region in which the pixel distance from the background region is no more than a threshold (e.g., several pixels). Note that the boundary region corresponds to a portion that becomes an edge in the three-dimensional data and the region in the vicinity thereof.

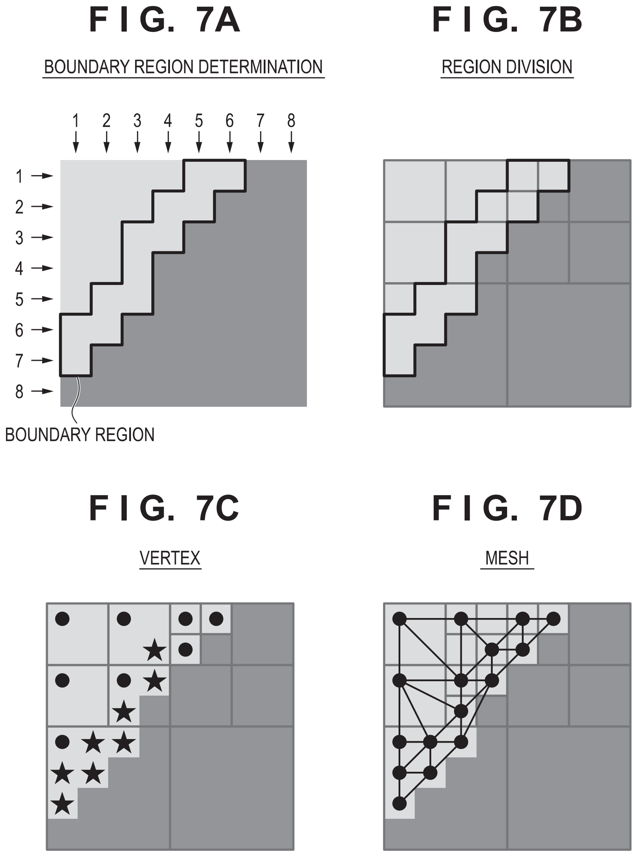

FIG. 7A illustrates an example of how the boundary region is set. In this example, regions of the object region in which the chessboard distance (also called Chebyshev distance) from the background region is 1 are set as the boundary region. For example, the control unit 101 stores, in the work memory 104, position information of the outer edge of the object region in the depth image, and the threshold for setting the boundary region. Note that the mask image may be used as the position information of the outer edge of the object region.

### <Region-Division Preprocessing Step S120>

In a region-division preprocessing step S120, the control unit 101 executes generation of an image to be divided, changing of pixel values in the image to be divided, setting of a division threshold, resizing and padding processing of the image to be divided, etc.

For example, the control unit 101 can generate a differential image of the depth image as the image to be divided. Thus, an image to be divided having pixel values corresponding to the magnitudes of distance gradients can be obtained.

In the image to be divided, the pixel values in the background region may or may not be changed. In a case in which the pixel values in the background region are not changed, it is likely that, in the region-division processing, a sub-region including either the object or the background would be set to a portion in which there is a great difference in distance between the object and the background. Furthermore, it is likely that a sub-region including both the object and the background would be set to a portion in which there is a small difference in distance between the object and the background.

In a case in which the pixel values in the background region are changed, the control unit 101 may change the pixel values in the background region into a value (e.g., a Not a Number (NaN) value) that does not affect a determination in the region-division processing of whether or not to divide a region. If such a change is carried out, it is likely that a boundary portion of the object region in which there is a significant change in shape would be divided until sub-region size becomes small. Furthermore, it is likely that a sub-region including both the object and the background would be set to a boundary portion of the object region in which there is not much change in shape because the division would stop before sub-region size becomes small.

The division threshold is a threshold that is used in the region-division step to determine whether or not a target sub-region is to be divided any further. So that the object region can be efficiently represented using a small number of polygons, a value with which a region in which there is not much change in shape would not be divided repeatedly more than necessary and a region in which there is a significant change in shape would be divided repeatedly until sub-region size becomes small is desirable.

For example, the division threshold may be a threshold to be applied to an index relating to the variation of pixel values within a sub-region. For example, the index relating to the variation of pixel values may be the maximum value among pixel values within a sub-region, the range (difference between the maximum and minimum values) of pixel values within a sub-region, the standard deviation of pixel values within a sub-region, or the like.

For example, the division threshold may be determined by experimentation and stored in advance in the non-volatile memory 103. Alternatively, the control unit 101 may dynamically set the division threshold in accordance with a predetermined reference for determination, such as the range of pixel values included in the image to be divided.

The resizing and padding processing is processing for shaping the image to be divided into a size that can be divided into sub-regions of maximum size without excess or deficiency. Accordingly, the control unit 101 applies, to the image to be divided, resizing and padding processing that is in accordance with the region-division method, and the shape and maximum size of sub-regions. Note that the horizontal-direction and vertical-direction scale factors applied in the resizing processing are equal. Furthermore, a pixel added in the padding processing is provided with a value that has a sufficiently great difference from adjacent pixel values in the object region, and it is also ensured that there are no sub-regions including both a region added by the padding and a region existing from before the padding. Padded pixels may be provided with a NaN value.

The control unit 101 stores the image to be divided having been subjected to the above-described preprocessing in the work memory 104.

### <Region-Division Step S130>

In a region-division step S130, the control unit 101 executes region-division processing on the image to be divided having been subjected to the preprocessing. The region-division processing is processing for dividing the image to be divided into sub-regions of a predetermined shape. The predetermined shape is typically polygonal (square, rectangle, triangle, or the like), but may also be other shapes. Furthermore, the predetermined shape may also be a rectangular prism or cube.

As methods for dividing an image into sub-regions, there is a top-down method of first dividing the image into sub-regions of maximum size and then repeating division into smaller sizes in accordance with a condition, and a bottom-up method of first dividing the image into sub-regions of minimum size and then repeating integration into larger sizes in accordance with a condition. Here, the top-down method is used as an example.

As a method for recursively dividing a multi-dimensional space into sub-regions based on a predetermined condition, there is a method of using a tree structure such as a k-d tree, a quadtree, or an octree. In k-d tree-based region division, each node represents a K-dimensional space. A space is divided into sub-regions of different sizes by recursively executing processing of repeatedly dividing the current node (K-dimensional space) into two K-dimensional spaces based on a predetermined condition, and storing the obtained K-dimensional spaces as child nodes.

On the other hand, in a quadtree-based method, processing of dividing a two-dimensional space into four nodes (two-dimensional spaces) and storing the obtained nodes in child nodes is recursively executed. Methods in which other tree structures are used are also applicable to the present embodiment; nevertheless, the quadtree-based method will be described as an example.

First, the control unit 101 equally divides the image to be divided in the horizontal and vertical directions to divide the image to be divided into four sub-regions of maximum size. Then, the control unit 101 determines whether or not redivision is to be performed for each individual sub-region. The division is stopped for sub-regions for which it is determined that redivision is not to be performed. On the other hand, for a sub-region for which it is determined that redivision is to be performed, the control unit 101 divides the sub-region into four sub-regions, and determines the necessity of redivision for each individual sub-region. The control unit 101 recursively executes such division processing and determination processing until the division stops for all sub-regions.

The control unit 101 determines the necessity of redivision using the division threshold determined in the preprocessing in step S120. For example, the control unit 101 can determine that redivision is to be performed if the index relating to the variation of pixel values within the determination-target sub-region is greater than or equal to the division threshold. The differential image of the depth image has great values in regions in which the change in distance is great and has small values in regions in which the change in distance is small. Thus, by performing determination using the division threshold, region division for accurately representing the shape of the object region can be realized while suppressing the number of polygons because the redivision is likely to occur in regions in which the change in distance is great and stop in regions in which the change in distance is small. The control unit 101 stores position information of the sub-regions in the work memory 104. Note that, for example, the position information of the sub-regions may be information indicating a quadtree structure corresponding to the region-division result. FIG. 7B illustrates the region-division result for the portion illustrated in FIG. 7A.

Note that other conditions may be taken into consideration in determining whether or not redivision is to be performed. For example, an upper limit may be set to the ratio between the lengths of sides (e.g., long sides or short sides) of adjacent sub-regions. This makes it possible to limit local vertex layout patterns in the generation of a polygon mesh consists of vertices each corresponds to different sub-region. Furthermore, this has the effect that the minimum interior angle in the polygon mesh to be generated can be increased.

### <Vertex Determination Step S140>

In a vertex determination step S140, the control unit 101 determines vertices constituting a polygon mesh of the object region based on the sub-regions generated in step S130.

According to the above-described region-division method, portions of the object region in which the change in shape is great are divided into small-sized sub-regions. Furthermore, in order to improve the accuracy of representation of portions in which the change in shape is great, it is desirable that the density of vertices in the polygon mesh be increased. On the other hand, portions of the object region in which the change in shape is small are divided into large-sized sub-regions. Furthermore, portions in which the change in shape is small can be accurately represented even if the density of vertices in the polygon mesh is low. Accordingly, a polygon mesh capable of representing the object region efficiently can be generated by determining a vertex for each sub-region. Note that this does not mean that the possibility of a plurality of vertices being determined in one sub-region is excluded.

For example, the control unit 101 can determine a predetermined number of polygon-mesh vertices for each sub-region. Specifically, for example, the control unit 101 can determine the pixel that is closest to the upper left vertex as a polygon-mesh vertex. Note that, if a sub-region has the size of a single pixel, the control unit 101 determines the pixel constituting the sub-region as a vertex. The control unit 101 stores the coordinates of the determined vertices in the work memory 104. The coordinates may be combinations of the above-described column and row numbers. Note that each apex determined here may be referred to as an initial apex because the vertex may be changed in the next step.

### <Vertex Adjustment Step S150>

In a vertex adjustment step S150, the control unit 101 adjusts the vertices determined in step S140. Specifically, the control unit 101 adjusts the number of vertices so that the ratio of the number of vertices within the boundary region to the number of vertices outside the boundary region increases. The "adjustment" of vertices includes the addition, deletion, and movement of vertices. The control unit 101 can execute one or more of: the addition of vertices within the boundary region; the deletion of vertices outside the boundary region; and the movement of vertices from the outside of the boundary region to within the boundary region.

Because the boundary region is set to the edge portion of the object region, an improvement in the accuracy with which the outer edge of the object region is represented can be expected by adding vertices to the boundary region. In particular, because large-sized sub-regions are likely to include both the object and the background, the representation accuracy improvement effect achieved by adding vertices is high for such sub-regions.

The method for adding vertices is not particularly limited. As the simplest example, the control unit 101 can add, as vertices, all pixels within the boundary region that have not been determined as vertices. Alternatively, the control unit 101 can add, as vertices, all pixels that have not been determined as vertices among pixels within the boundary region that are closest to the object region in horizontal distance. In FIG. 7C, the vertices determined in step S140 in regard to the region-division result illustrated in FIG. 7B are illustrated by • (black dots). Furthermore, in FIG. 7C, the vertices that have been added in step S150 to all pixels in the boundary region that have not been determined as vertices are illustrated by * (black stars). The control unit 101 stores the positions (image coordinates) of the vertices after the adjustment processing in the work memory 104.

### <Mesh Generation Step S160>

In a mesh generation step S160, the control unit 101 generates a polygon mesh using the vertices determined by steps S140 and S150. The polygon mesh is generated using pixel values in the depth image corresponding to the determined vertices. The control unit 101 can generate a polygon mesh from a plurality of vertices using an appropriate known method. For example, the control unit 101 can generate a triangular polygon mesh by performing constrained Delaunay triangulation. In this case, the control unit 101 can generate a polygon mesh under the constraint that no polygon is formed in the background region. FIG. 7D illustrates an example of a polygon mesh generated from the vertices illustrated in FIG. 7C.

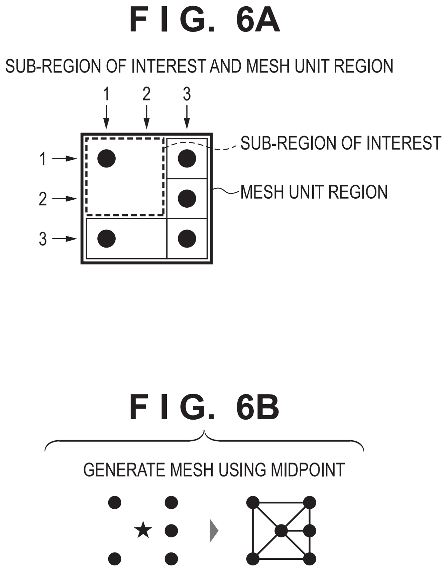

Furthermore, as an example of another method, the control unit 101 may generate a polygon mesh for each mesh unit region formed from a plurality of sub-regions. In the following, this method will be described with reference to the flowchart in FIG. 5, and FIGS. 6A and 6B.

The mesh generation processing is repeatedly executed in units of individual mesh unit regions. First, a mesh unit region will be described. For example, suppose that the 2×2-pixel sub-region illustrated in FIG. 6A is a sub-region of interest. In this case, the candidates of connection destinations of the vertex in the sub-region of interest are the vertices of the sub-regions adjacent to the right, lower, and lower-right sides of the sub-region of interest among other sub-regions adjacent to the sub-region of interest.

The control unit 101 sets, as a mesh unit region, a region constituted from the sub-region of interest and the adjacent sub-regions including the vertices that are connection-destination candidates. Because the mesh unit region is determined in accordance with the sub-region of interest in such a manner, adjacent mesh unit regions include the same sub-regions in parts thereof. By generating a polygon mesh for each of such mesh unit regions, a polygon mesh covering the entire object region can be ultimately generated. In a case in which a polygon mesh is to be generated using mesh unit regions, the control unit 101, after the completion of vertex adjustment, sets mesh unit regions over the entire region to be divided and executes the operations illustrated in the flowchart in FIG. 5.

In step S161, the control unit 101 determines whether or not there is an unprocessed mesh unit region, and executes step S162 if it is determined that there is an unprocessed mesh unit region and otherwise terminates polygon-mesh generation.

In step S162, the control unit 101 acquires, from the work memory 104, coordinates of the vertices included in the processing-target mesh unit region. In the example illustrated in FIG. 6A, the vertex coordinates are (1, 1), (3, 1), (3, 2), (1, 3), and (3, 3). Practically, the vertex positions are indicated using image coordinates of the image to be divided.

In step S163, the control unit 101 connects the vertices to generate a triangular polygon mesh, for example. Any appropriate method may be applied as the method for forming triangles, and Delaunay triangulation can be used, for example.

Furthermore, the control unit 101 may add a vertex (*) at the center of the mesh unit region as illustrated in FIG. 6B, for example, and may generate triangles from the added vertex and the vertices (•) that are originally set.

In step S164, the control unit 101 stores, in the work memory 104, information about the polygon mesh generated for the processing-target mesh unit region. For example, the control unit 101 stores, as mesh information, a list of the vertices of each triangle. The vertex information included in the list may be coordinates or vertex identification numbers. In a case in which identification numbers are used, the correspondence between the identification numbers and image coordinates is separately stored in advance.

As described up to this point, in the vertex adjustment step S150 in the present embodiment, vertices for polygon-mesh generation are added to the boundary region set in the object region. Thus, a polygon mesh in which the accuracy of the representation of the edge portion is improved can be generated because the density of polygons representing the edge portion of the object region increases.

### Second Embodiment

Next, a second embodiment will be described. The present embodiment is the same as the first embodiment other than that the operations of the control unit 101 in the vertex adjustment step S150 differ. Accordingly, the operations of the control unit 101 in the vertex adjustment step in the present embodiment will be described in the following.

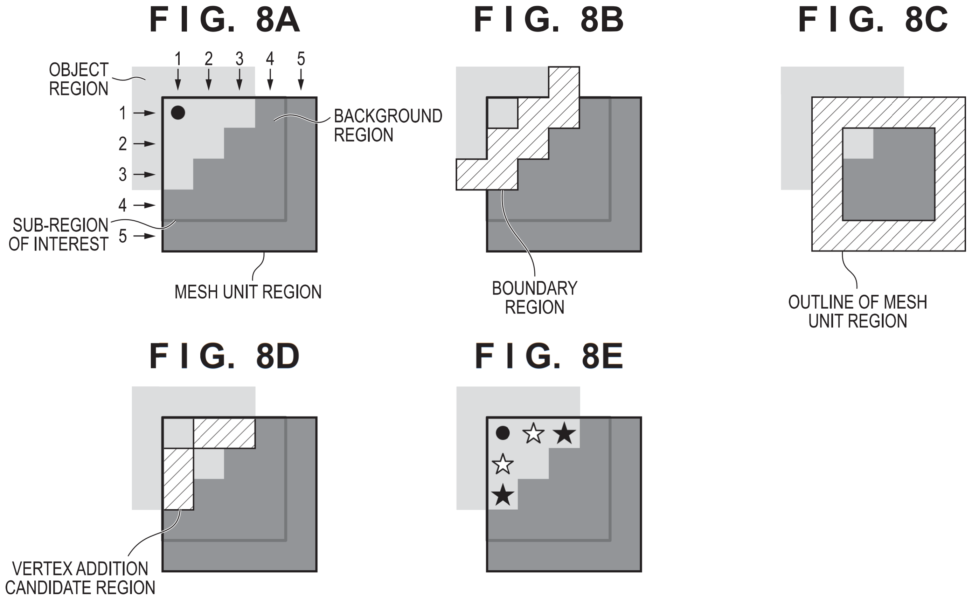

FIGS. 8A to 8E are diagrams schematically illustrating the operations of the control unit 101 in the vertex adjustment step in the present embodiment. In FIGS. 8A to 8E, operations for only one mesh unit region are illustrated; however, in practice, the same operations are executed for each mesh unit region, which includes a sub-region of interest including both the object region and the background region.

FIG. 8A illustrates an example mesh unit region including a sub-region of interest that is a 4×4-pixel square region including both the object region and the background region in the image to be divided. As described in regard to FIG. 6A, the mesh unit region is constituted from the sub-region of interest and sub-regions that are adjacent to the right, lower, and lower-right sides of the sub-region of interest. Because the sub-regions adjacent to the sub-region of interest within the mesh unit region do not include the object region, vertices for polygon-mesh generation are not set in the adjacent sub-regions. In this case, no polygons are generated between the initial vertex (•) for polygon-mesh generation set in the sub-region of interest and the sub-regions that are adjacent to the sub-region of interest within the mesh unit region. Consequently, no polygon relating to the object region within the sub-region of interest is generated.

The hatched portion in FIG. 8B is an example of the boundary region, and the hatched portion in FIG. 8C is an outline formed by single pixels at the outer edge of the mesh unit region for the sub-region of interest. Furthermore, the hatched portions in FIG. 8D are regions where the boundary region and the outline overlap. In the present embodiment, the control unit 101 sets, as candidate regions for adding vertices for polygon-mesh generation, regions in which the boundary region and the outline of the mesh unit region overlap.

FIG. 8E illustrates an example in which a vertex (★ and ☆ (white stars)) for polygon-mesh generation has been added to each pixel included in the candidate regions. By connecting the initial vertex (•) in the sub-region of interest and the added vertices (★ or ☆), a triangular polygon can be generated in the sub-region of interest.

As described above, in the present embodiment, the control unit 101 adds vertices for polygon-mesh generation to regions where the boundary region and the outline of the mesh unit region overlap. Thus, the polygon-mesh data amount can be reduced because the number of vertices can be reduced compared to a case in which a vertex is added to each one of pixels included the boundary region to which an initial vertex has not been set.

In a case in which the boundary region within the sub-region of interest is substantially linear, a straight line obtained by linearly connecting the end points of the boundary region within the sub-region would substantially match the original boundary region. In other words, the side obtained by setting points where the outline of the mesh unit region and the boundary region intersect as vertices and connecting these vertices would substantially match the boundary region (on condition that the boundary region is substantially linear). Due to such a reason, the number of vertices can be reduced while maintaining fidelity of the object region by adding vertices to points where the boundary region and the outline of the mesh unit region intersect and connecting such vertices to form a side.

While vertices may be added over the entirety of the candidate regions, vertices may be added only to the end points of the boundary region within the mesh unit region. This suppresses the addition of unnecessary vertices. In FIG. 8E, the added vertices ☆ are on straight lines connecting the initial vertex • and the vertices * added to the end points of the boundary region; thus, mesh quality would not be affected even if the vertices ☆ are not added. For example, the increase of polygons can be suppressed by only adding vertices in the candidate regions only at the end points of the boundary region (pixels adjacent to the background region) within the mesh unit region. This corresponds to a case in which the vertices * are added and the vertices ☆ are not added in FIG. 8E.

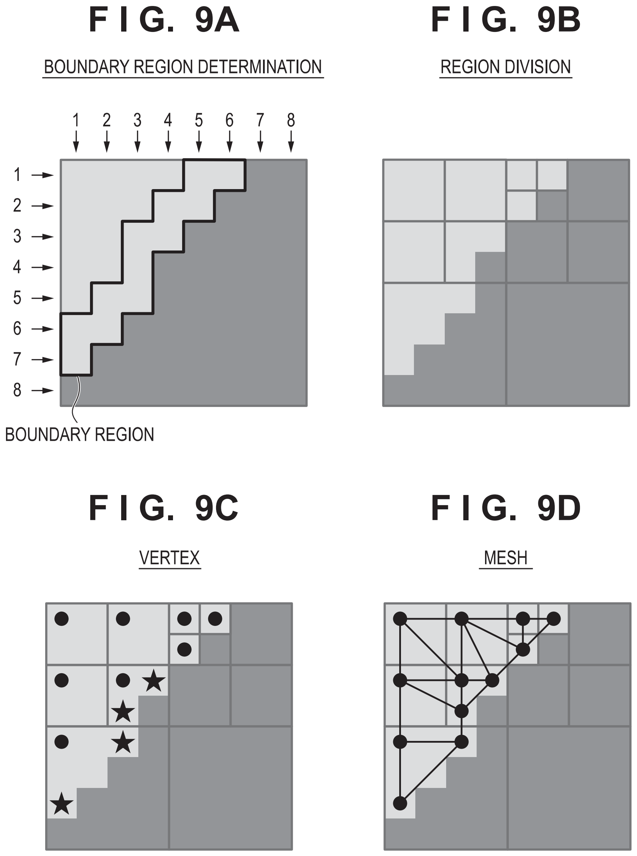

A specific example of polygon-mesh generation in the present embodiment will be described based on FIGS. 9A to 9D. FIGS. 9A and 9B are respectively the same as FIGS. 7A and 7B. That is, the control unit 101 executes the processing from the setting of the boundary region to the determination of initial vertices (steps S110 to S140 in FIG. 4) in the same manner as in the first embodiment. The determined initial vertices • are illustrated in FIG. 9C.

In the vertex adjustment step S150, the control unit 101 adds vertices to regions (candidate regions) where the boundary region and the outlines of mesh unit regions overlap. The added vertices * are illustrated in FIG. 9C.

In the mesh generation step S160, the control unit 101 uses the initial vertices and the added vertices to generate a polygon mesh in the same manner as in the first embodiment. FIG. 9D illustrates the generated polygon mesh.

The same effect as that of the first embodiment can be realized also in the present embodiment. Furthermore, because the number of added vertices can be suppressed compared to that in the first embodiment, the polygon-mesh data amount can be reduced.

### Third Embodiment

Next, a third embodiment will be described. The present embodiment is the same as the first embodiment other than that the operations of the control unit 101 in the mesh generation step S160 differ. Accordingly, the operations of the control unit 101 in the mesh generation step in the present embodiment will be described in the following.

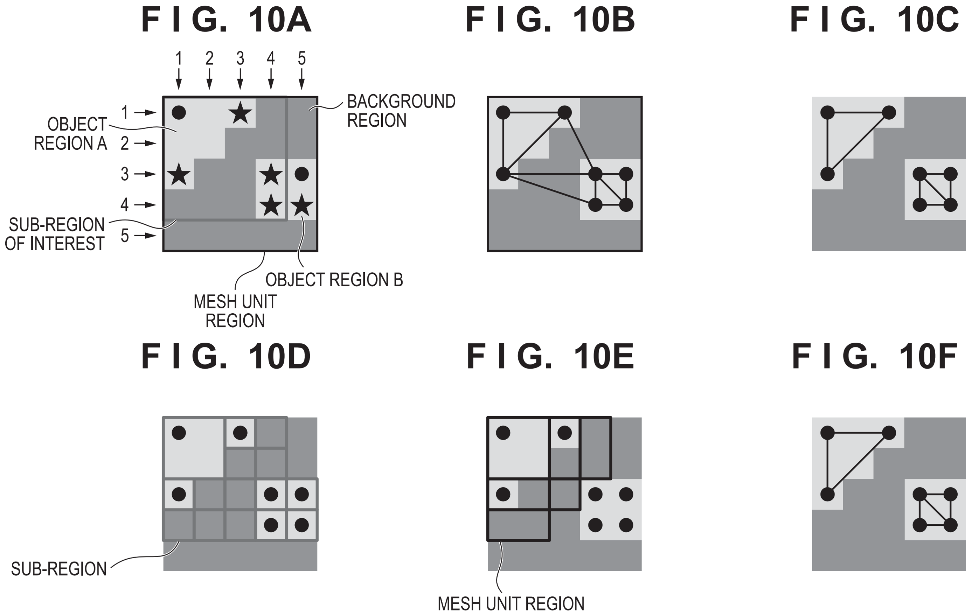

FIGS. 10A to 10F are diagrams schematically illustrating the operations of the control unit 101 in the mesh generation step in the present embodiment. In FIGS. 10A to 10F, operations for only one mesh unit region are illustrated; however, in practice, the same operations are executed for each mesh unit region, which includes a sub-region of interest including both the object region and the background region.

FIG. 10A illustrates a state in which the vertex adjustment step S150 has been performed for a mesh unit region including two non-adjacent object regions A and B. The processing-target mesh unit region includes initial vertices • and added vertices *.

In the mesh generation step S160 in the first and second embodiments, the control unit 101 generates a polygon mesh using all of the initial vertices and added vertices included within a mesh unit region. If the same processing as that in the first and second embodiments were applied to the vertices illustrated in FIG. 10A, a polygon mesh as illustrated in FIG. 10B would be generated. As can be seen from FIG. 10B, if a polygon mesh is generated using all vertices in a case in which an object region A and an object region B that are not adjacent (or independent) are present within a mesh unit region, polygons would also be generated in the background region. This results in a decrease in the accuracy with which the object region is represented by the polygon mesh.

In view of this, the mesh generation step in the present embodiment is configured such that polygons are not generated between unconnected object regions. For example, in the mesh generation step, the control unit 101 generates a polygon mesh under a constraint such that vertices are not connected between non-adjacent object regions within a mesh unit region. Consequently, as illustrated in FIG. 10C, a polygon mesh in which vertices are not connected between non-adjacent object regions is generated.

Furthermore, instead of the mesh generation step, the region-division step or the mesh-unit-region creation step may be changed so that mesh unit regions do not include a plurality of object regions. For example, mesh unit regions corresponding to the sub-regions on the object region A in FIG. 10D are illustrated in FIG. 10E, and it can be seen that none of the mesh unit regions include the object region B. Consequently, as illustrated in FIG. 10F, meshes can be generated in a state in which non-adjacent object regions are not connected with polygons.

The same effects as those of the first and second embodiments can be realized according to the present embodiment. Furthermore, the accuracy with which the edge portion of the object region is represented by a polygon mesh can be improved because the generation of polygons in the background region can be suppressed.

### Fourth Embodiment

Next, a fourth embodiment will be described. The present embodiment is the same as the second embodiment other than that the operations of the control unit 101 in the vertex adjustment step S150 differ. Accordingly, the operations of the control unit 101 in the vertex adjustment step in the present embodiment will be described in the following.

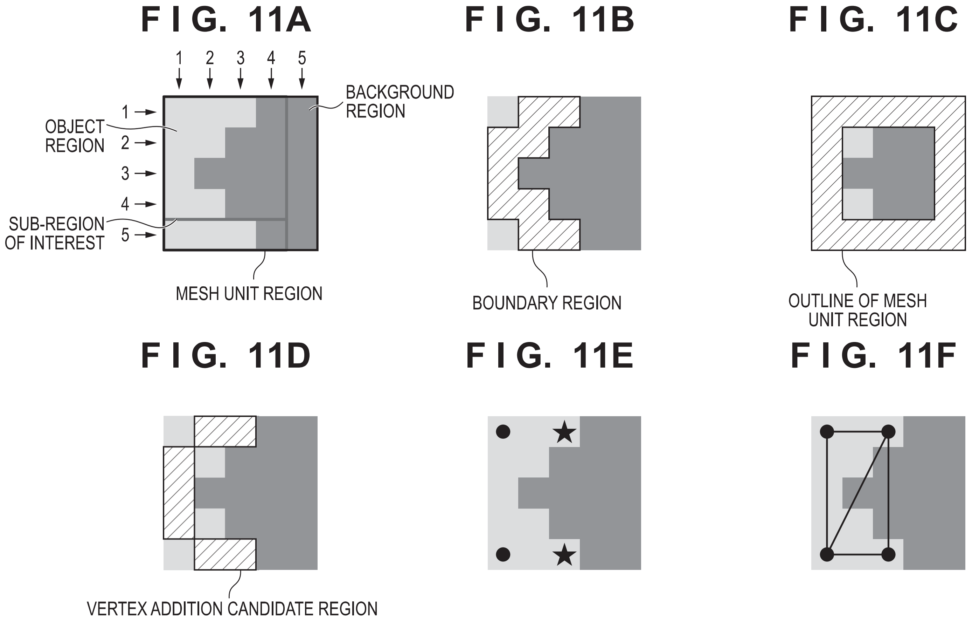

In the second embodiment, vertices are added assuming a case in which the boundary region within a mesh unit region is a substantially straight line. FIG. 11A illustrates an example of a mesh unit region including the object region and the background region. The mesh unit region has a size of 5×5 pixels, and the sub-region of interest has a size of 4×4 pixels. Note that the sub-region adjacent to the lower side of the sub-region of interest has a size of 4×4 pixels. Furthermore, FIG. 11B and FIG. 11C respectively illustrate the boundary region and the outline of the mesh unit region. The boundary region is curved.

In the method described in the second embodiment, the control unit 101 determines vertex addition candidate regions as illustrated in FIG. 11D. Furthermore, the control unit 101 generates a polygon mesh as illustrated in FIG. 11F after determining initial vertices • and added vertices * as illustrated in FIG. 11E. The accuracy with which the shape of the edge portion of the object region is represented decreases because the generated polygon mesh includes part of the background region.

The present embodiment addresses such an issue that may occur in the second embodiment. Specifically, in the region-division step S130, the control unit 101 evaluates the linearity of the boundary region within sub-regions. Furthermore, the control unit 101 increases the likelihood of redivision of a sub-region for which the linearity is evaluated as being low compared to that of a sub-region for which the linearity is not evaluated as being low.

Specifically, in the region-division step S130, the control unit 101 executes, for the processing-target sub-region in the depth image, evaluation of the linearity of the boundary region in addition to the determination of variation. Furthermore, the control unit 101 determines that redivision is to be performed if the logical OR of the result of the determination of variation (the result is 1 when the division threshold is equaled or exceeded) and the result of the determination of the linearity of the boundary region (the result is 1 if it is determined that linearity is low) is 1.

For example, in the determination of the linearity of the boundary region, a regression line is obtained for the group of pixel coordinates in the boundary region within the sub-region, and it can be determined that linearity is high if the mean squared error of the minimum distance between the regression line and each pixel within the boundary region is less than a threshold, whereas it can be determined that linearity is low if the mean squared error is more than or equal to the threshold. Alternatively, a straight line obtained by connecting the end points of the boundary region within the sub-region may be used as the regression line. Furthermore, the average may be used in place of the mean squared error.

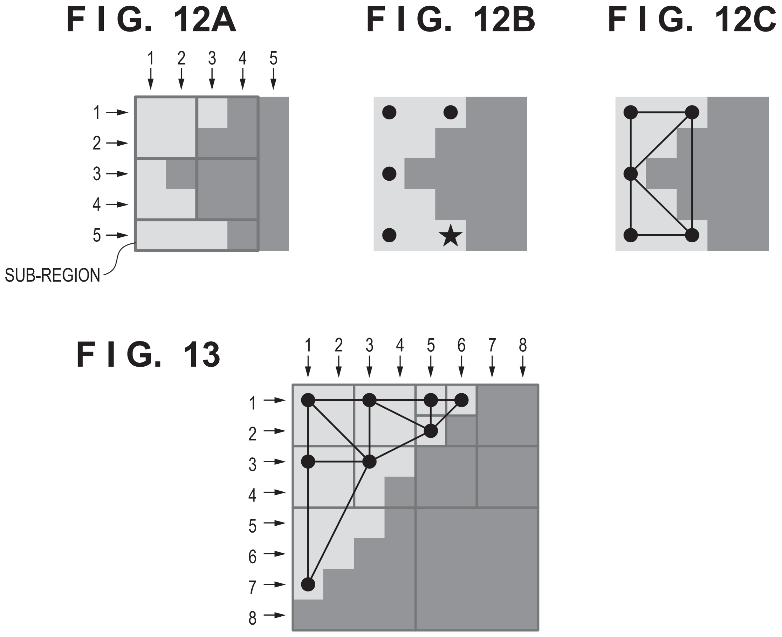

An effect of the present embodiment will be described with reference to FIGS. 12A to 12C. FIG. 12A illustrates the same region as FIG. 11A, but in a state in which the sub-region of interest in FIG. 11A has been further divided into four as a result of it being determined that the linearity of the boundary region is low. Due to division having progressed further, initial vertices • and added vertices * are determined as illustrated in FIG. 12B. Thus, a polygon mesh as illustrated in FIG. 12C is generated. In comparison with the polygon mesh illustrated in FIG. 11F, it can be seen that the accuracy with which the edge portion of the object region is represented has improved.

According to the present embodiment, the same effect as the second embodiment can be realized even if the boundary region included in a unit mesh region does not have a linear shape.

### Fifth Embodiment

Next, a fifth embodiment will be described. The present embodiment is the same as the first embodiment other than that the operations of the control unit 101 in the vertex adjustment step S150 differ. Accordingly, the operations of the control unit 101 in the vertex adjustment step in the present embodiment will be described in the following.

In the above-described embodiments, the ratio of the number of vertices within the boundary region to the number of vertices outside the boundary region is increased by adding vertices within the boundary region in the vertex adjustment step S150. In the present embodiment, the number of vertices is adjusted so that the ratio of the number of vertices within the boundary region to the number of vertices outside the boundary region increases by moving vertices outside the boundary region into the boundary region.

An example of a method for moving a vertex will be described. The control unit 101 moves a vertex that is located within a mesh unit region including both the object region and the background region, and that is located outside the boundary region. The movement destination is a position within the boundary region included in the same mesh unit region. If there are a plurality of movement-destination candidates, the control unit 101 can select the position so that the area of the polygon including the moved vertex is maximized.

For example, a mesh unit region (FIG. 8A) in which a 4×4-pixel sub-region at the bottom left of the object region is the sub-region of interest, as illustrated in FIG. 7A, will be considered. The initial vertex determined in the sub-region of interest within the mesh unit region illustrated in FIG. 8A is located at coordinates (1, 5) in FIG. 7A. This initial vertex satisfies the condition of a vertex to be moved. Thus, the control unit 101 moves this initial vertex to a position within the boundary region. The movement-destination candidates are the five positions in which added vertices * are illustrated in FIG. 7C; under such circumstances, the control unit 101 moves the initial vertex to coordinates (1, 7) so that polygon area is maximized. The moved vertex and the polygon mesh generated are illustrated in FIG. 13.

According to the present embodiment, the accuracy with which the edge portion of the object region is represented can be improved without increasing the number of vertices.

### Sixth Embodiment

Next, a sixth embodiment will be described. The present embodiment is the same as the first embodiment other than that the operations of the control unit 101 in the vertex adjustment step S150 differ. Accordingly, the operations of the control unit 101 in the vertex adjustment step in the present embodiment will be described in the following.

The first to fifth embodiments improve the quality of polygon meshes generated for sub-regions including both the object region and the background region. The present embodiment improves polygon mesh quality by suppressing the formation of sub-regions including both the object region and the background region.

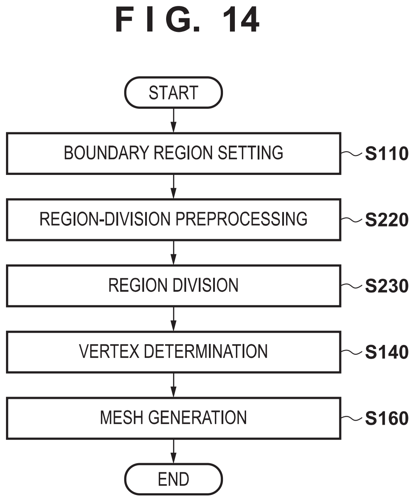

FIG. 14 is a flowchart relating to polygon-mesh generation operations executed by the control unit 101 in the present embodiment. The same reference numerals as those in FIG. 4 are provided to steps in which the same operation as that in the first embodiment is executed, and description thereof is omitted. In the present embodiment, processing corresponding to the vertex adjustment step S150 in the first embodiment is executed in a region-division preprocessing step S220 or a region-division step S230.

In the region-division preprocessing step S220, the control unit 101 executes the same processing as that in the first embodiment, such as generation of an image to be divided, changing of pixel values in the image to be divided, setting of a division threshold, and resizing and padding processing of the image to be divided.

In the present embodiment, the control unit 101 further executes processing such that the likelihood of redivision of the inside of the boundary region increases compared to that of the outside of the boundary region. For example, the control unit 101 replaces the pixel values within the boundary region in the image to be divided so that the redivision determination condition is more likely to be satisfied.

For example, in a case in which it is determined in the region-division step S230 that redivision is to be executed if the maximum of the pixel values included within the processing-target sub-region is greater than the threshold, the control unit 101 replaces the pixel values within the boundary region with a value exceeding the threshold. The formation of sub-regions including both the object region and the background region can be suppressed by this replacement because, in the region-division step S230, redivision will be repeated until the sub-regions within the boundary region equal the minimum size (single pixel). The control unit 101 executes the subsequent vertex determination step and mesh generation step in the same manner as in the first embodiment.

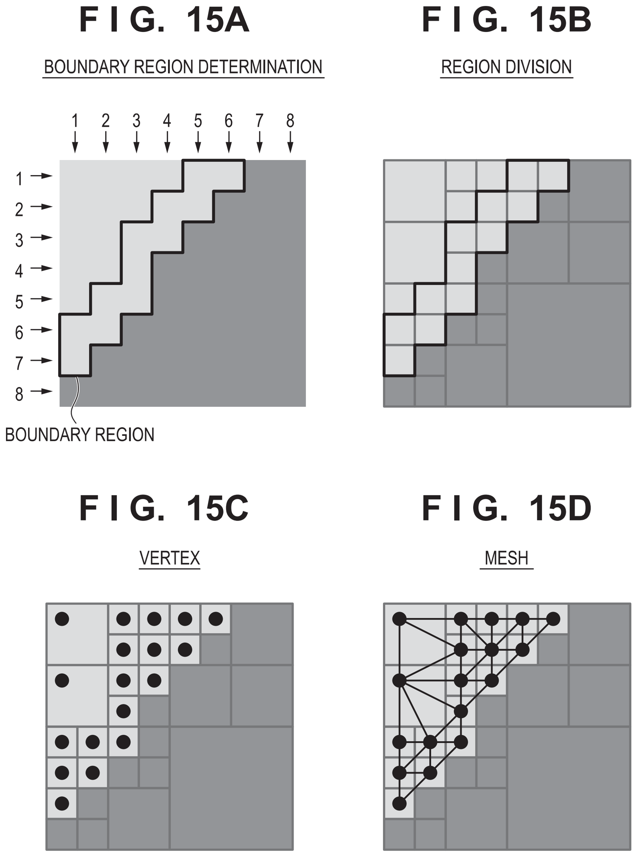

FIGS. 15A to 15D are diagrams for describing the present embodiment. The pixel positions of the object region and the background region are the same as those in FIGS. 7A to 7D.

In the boundary region setting step S110, the control unit 101 sets the boundary region in the same manner as in the first embodiment (FIG. 7A). In the region-division preprocessing step S220, the control unit 101 replaces or changes the pixel values within the boundary region so that the likelihood of redivision being repeated within the boundary region increases compared to that of the outside of the boundary region as described above.

Consequently, in the region-division step S230, the boundary region is divided into sub-regions of the minimum size, and sub-regions including both the object region and the background region are eliminated, as illustrated in FIG. 15B. Due to this, in the vertex determination step S140, initial vertices • are set to all sub-regions within the boundary region as illustrated in FIG. 15C, and the vertex adjustment step does not need to be executed. Subsequently, the control unit 101 generates a polygon mesh as illustrated in FIG. 15D in the mesh generation step S160.

In the present embodiment, region division is performed in the region-division preprocessing step S220 and the region-division step S230 so that many vertices are disposed within the boundary region. Thus, a polygon mesh representing the edge portion of the object region with high quality can be generated. Furthermore, the increase of unnecessary vertices can be suppressed by dividing the object region outside the boundary region into sub-regions of different size.

### Modification

The formation of sub-regions including both the object region and the background region may be suppressed according to a method other than the replacement of pixel values. For example, in the region-division preprocessing step S220, the control unit 101 also sets the mask image representing the object region as an image to be divided, in addition to the differential image of the depth image. Then, in the region-division step S230, the control unit 101 executes a determination of variation within a sub-region in the mask image in addition to the determination of variation within the sub-region in the depth image. The control unit 101 may determine that redivision is to be executed if the logical OR of the result of the determination of variation in the depth image (1 if the result is more than or equal to the threshold) and the result of the determination of variation in the mask image (1 if the sub-region includes both the object region and the background region) is 1. Thus, sub-regions including both the object region and the background region are always redivided, and thus the formation of sub-regions including both the object region and the background region can be suppressed.

Alternatively, a configuration may be adopted such that, in the region-division step, the boundary region and the region outside the boundary region are divided independently of one another, and the boundary region is divided into sub-regions of minimum size unconditionally. Note that two or more among the above-described first to sixth embodiments may be implemented in combination.

### Seventh Embodiment

Next, a seventh embodiment will be described. In the first to sixth embodiments, vertices within the boundary region are added after the application of region division, in which division into sub-regions of maximum size is first performed, and then sub-regions in which there is a significant change in shape are repeatedly redivided. The present embodiment relates to a case in which region division for division into sub-regions of minimum size is applied from the beginning.

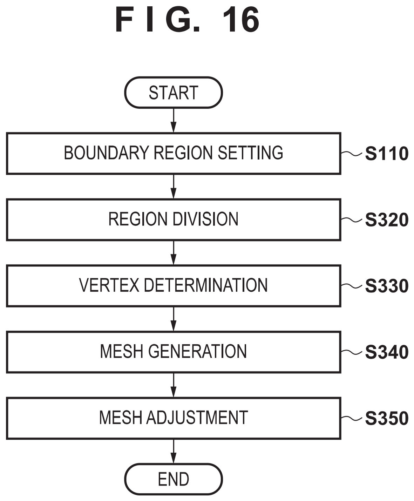

FIG. 16 is a flowchart relating to polygon-mesh generation operations executed by the control unit 101 in the present embodiment. The same reference numerals as those in FIG. 4 are provided to steps in which the same operation as that in the first embodiment is executed, and description thereof is omitted.

In a region-division step S320, the control unit 101 executes region-division processing on the image to be divided. In the present embodiment, the control unit 101 divides the image to be divided into sub-regions of minimum size. Note that the region-division step need not be executed if the minimum size of sub-regions is 1 pixel. Furthermore, if the minimum size of sub-regions is larger than 1 pixel, the region division may be executed after the above-described padding processing is executed.

In a vertex determination step S330, the control unit 101 sets one vertex per sub-region. For example, if the minimum size of sub-regions is 1 pixel, the control unit 101 sets a vertex to each pixel within the object region in the image to be divided.

In a mesh generation step S340, the control unit 101 generates polygon meshes using the vertices set in step S330. The polygon meshes are generated using the pixel values in the depth image corresponding to the set vertices. The control unit 101 can generate polygon meshes from a plurality of vertices using any appropriate known method.

In a mesh adjustment step S350, the control unit 101 executes mesh adjustment including vertex deletion on object-region meshes outside the boundary region set in step S110. Note that the control unit 101 is configured so as not to delete vertices within the boundary region in the adjustment.

For the mesh adjustment, a method such as Quadric Error Metrics (QEM), for example, can be used. In QEM, deletion of sides that would not bring about much change in mesh shape even if deleted (integration of two vertices that are end points of a side) is repeated. Thus, in the object region outside the boundary region, the number of polygons corresponding to regions in which there is not much change in shape can be reduced (the number of vertices can be reduced). Accordingly, three-dimensional data can be obtained in which a subset of the vertices that have been set are used for the object region outside the boundary region, and all of the vertices that have been set are used for the boundary region.

Note that, while vertices are deleted after meshes are generated in the present embodiment, meshes may be generated after vertices are reduced by, in the object region outside the boundary region, integrating sub-regions corresponding to adjacent vertices between which the change in value is no more than a threshold.

In the present embodiment, vertices are deleted in the object region outside the boundary region after the image to be divided is divided into sub-regions of minimum size and a vertex is set to each sub-region. The same effect as that of the first embodiment can be realized also in the present embodiment.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image processing apparatus (100) that generates three-dimensional data of an object based on a depth image, comprising:
setting means (101) for setting, to an object region in an image to be divided that is based on the depth image, a boundary region between the object region and a background region;
dividing means (101) for dividing the image to be divided into a plurality of sub-regions;
determining means (101) for determining a vertex for each sub-region that includes the object region among the plurality of sub-regions;
adjusting means (101) for adding a vertex to the boundary region; and
generating means (101) for generating the three-dimensional data using the vertices determined by the determining means and the vertex added by the adjusting means.

2. The image processing apparatus (100) according to claim 1,
wherein the adjusting means (101) adds a vertex for each pixel for which a vertex has not been determined by the determining means from among pixel(s) included in the boundary region.

3. The image processing apparatus (100) according to claim 1,
wherein the adjusting means (101) adds a vertex to a region in which the boundary region and an outline of a mesh unit region overlap, the mesh unit region being formed from a sub-region of interest and an adjacent sub-region.

4. The image processing apparatus (100) according to any one of claims 1 to 3,
wherein the generating means (101) generates the three-dimensional data without connecting vertices between non-adjacent object regions.

5. The image processing apparatus (100) according to any one of claims 1 to 4,
wherein the dividing means (101) divides the image to be divided into the plurality of sub-regions by dividing the image to be divided into a predetermined number of sub-regions and thereafter repeatedly dividing a sub-region satisfying a redivision condition into the predetermined number of sub-regions.

6. The image processing apparatus (100) according to claim 1,
wherein the dividing means (101) divides the image to be divided into the plurality of sub-regions by dividing the image to be divided into a predetermined number of sub-regions and thereafter repeatedly dividing a sub-region satisfying a redivision condition into the predetermined number of sub-regions, and
if it is determined that a linearity of the boundary region within a sub-region is low, the dividing means (101) increases a likelihood of division of the sub-region so as to be higher compared to a case in which it is determined that the linearity of the boundary region within the sub-region is not low.

7. The image processing apparatus (100) according to claim 6,
wherein the dividing means (101) determines that the linearity is low if an average or a mean squared error of a minimal distance between a regression line and pixels in the boundary region is higher than or equal to a threshold, the regression line being based on pixel coordinates in the boundary region within the sub-region.

8. The image processing apparatus (100) according to claim 1,
wherein the adjusting means (101) adds the vertex to the boundary region by moving a vertex outside the boundary region to within the boundary region.

9. The image processing apparatus (100) according to claim 8,
wherein the adjusting means (101) moves a vertex included in a sub-region that includes the object region and the background region to within the boundary region.

10. The image processing apparatus (100) according to claim 8 or 9,
wherein the three-dimensional data is a polygon mesh, and
the adjusting means (101) determines a move destination of the vertex so as to maximize an area of a polygon including the moved vertex.

11. An image processing apparatus (100) that generates three-dimensional data of an object based on a depth image, comprising:
setting means (101) for setting, to an object region in an image to be divided that is based on the depth image, a boundary region between the object region and a background region;
dividing means (101) for dividing the image to be divided into a plurality of sub-regions;
determining means (101) for determining a vertex for each sub-region that includes the object region among the plurality of sub-regions; and
generating means (101) for generating the three-dimensional data using the vertices determined by the determining means (101),
wherein the dividing means (101) divides the image to be divided into the plurality of sub-regions in such a manner that no sub-region includes both the object region and the background region.

12. The image processing apparatus (100) according to claim 11,
wherein, by dividing the boundary region into sub-regions of a minimum size, the dividing means (101) divides the image to be divided into the plurality of sub-regions in such a manner that no sub-region includes both the object region and the background region.

13. The image processing apparatus (100) according to claim 11 or 12,
wherein the dividing means (101) divides the image to be divided into the plurality of sub-regions by dividing the image to be divided into a predetermined number of sub-regions and thereafter repeatedly dividing a sub-region satisfying a redivision condition into the predetermined number of sub-regions, and
the setting means (101) changes pixel values within the boundary region in such a manner that a likelihood of division being repeated is higher within the boundary region than outside the boundary region.

14. The image processing apparatus (100) according to claim 13,
wherein the dividing means (101) further divides, into the predetermined number of sub-regions, a sub-region in which the image to be divided or a mask image representing the object region satisfies the redivision condition.

15. The image processing apparatus (100) according to any one of claims 1 to 14,
wherein the image to be divided is a differential image of the depth image.

16. An image processing apparatus (100) that generates three-dimensional data of an object based on a depth image, comprising:
setting means (101) for setting, within an object region in an image to be divided that is based on the depth image, a boundary region between the object region and a background region;
determining means (101) for determining a plurality of vertices for the object region; and
generating means (101) for generating the three-dimensional data in such a manner that a subset of the determined vertices is used for the object region outside the boundary region and all of the determined vertices are used for the boundary region.

17. The image processing apparatus (100) according to claim 16,
wherein the generating means (101) generates three-dimensional data in which all of the plurality of vertices are used, and thereafter deletes a subset of vertices for the object region outside the boundary region.

18. The image processing apparatus (100) according to claim 16,
wherein the generating means (101) deletes a subset of vertices for the object region outside the boundary region, and thereafter generates the three-dimensional data.

19. An image processing method for generating three-dimensional data of an object based on a depth image, comprising:
setting (S110), within an object region in an image to be divided that is based on the depth image, a boundary region between the object region and a background region;
dividing (S130) the image to be divided into a plurality of sub-regions;
determining (S140) a vertex for each sub-region that includes the object region among the plurality of sub-regions;
adding (S150) a vertex to the boundary region; and
generating (S160) the three-dimensional data using the determined vertices and the added vertex.

20. A computer program executable by one or more processors, wherein the computer program, when executed by the one or more processors, causes the one or more processors to perform the image processing method according to claim 19.

21. An image processing method for generating three-dimensional data of an object based on a depth image, comprising:
setting (S110), within an object region in an image to be divided that is based on the depth image, a boundary region between the object region and a background region;
dividing (S230) the image to be divided into a plurality of sub-regions in such a manner that no sub-region includes both the object region and the background region;
determining (S140) a vertex for each sub-region that includes the object region among the plurality of sub-regions; and
generating (S160) the three-dimensional data using the determined vertices.

22. A computer program executable by one or more processors, wherein the computer program, when executed by the one or more processors, causes the one or more processors to perform the image processing method according to claim 21.
